# EUROPÄISCHE PATENTSCHRIFT

(11) **EP 3 343 430 B1**
(45) Veröffentlichungstag und Bekanntmachung des Hinweises auf die Patenterteilung: **19.08.2020**
(21) Anmeldenummer: 17211146.0
(22) Anmeldetag: 29.12.2017
(51) Int. Cl.: G06K 7/10

(54) **ERFASSUNGSVORRICHTUNG UND VERFAHREN ZUR BULK-ERFASSUNG VON MIT TRANSPONDERN VERSEHENEN WAREN**
SENSING DEVICE AND METHOD FOR BULK DETECTING OF GOODS WITH TRANSPONDERS
DISPOSITIF D'ENREGISTREMENT ET PROCÉDÉ D'ENREGISTREMENT EN VRAC DE MARCHANDISES POURVUS D'UN TRANSPONDEUR

(30) Priorität: 29.12.2016 DE 202016107482 U
(43) Veröffentlichungstag der Anmeldung: 04.07.2018
(73) Patentinhaber: Kemas GmbH, 09353 Oberlungwitz (DE)
(72) Erfinder: Uhlig, Silvio, 09123 Chemnitz (DE); Grämer, Hans-Jürgen, 01445 Radebeul (DE); Walosczyk, Ulrich, 09577 Niederwiesa (DE)
(74) Vertreter: Henkel & Partner mbB

(56) Entgegenhaltungen:
- EP-A1- 1 688 863
- EP-A1- 1 914 662
- DE-A1-102012 010 252

## Beschreibung

Die Erfindung betrifft eine Erfassungsvorrichtung, insbesondere für die Bulk-Erfassung von mit Transpondern versehenen Waren. Ebenso wird ein Verfahren zur Bulk-Erfassung von Waren offenbart.

Es ist bekannt, Waren durch eine sogenannte Bulk-Erfassung, auch "Pulkerfassung" oder "Mehrfacherfassung" genannt, bei der nahezu gleichzeitig viele Transponder automatisiert identifizier werden, um eine kostenverursachende Vereinzelung zu vermeiden. Logistikprozesse können hierdurch beschleunigt und vereinfacht werden. Für die Identifikation im Rahmen einer Bulk-Erfassung können beispielsweise RFID-Transponder verwendet werden, die berührungslos gelesen werden. Solche RFID-Transponder, insbesondere UHF-RFID-Transponder oder noch höherfrequente-RFID-Transponder, können an den zu erfassenden Waren angebracht sein.

Zwar ist bei der Bulk-Erfassung von Waren mit RFID-Transpondern die verhältnismäßig große Effizienz von Vorteil. Jedoch kann nicht immer sichergestellt werden, dass sämtliche Waren zuverlässig erkannt werden. Dies gilt insbesondere bei der Durchfahrt durch oder entlang einer Erfassungsvorrichtung. Bei einer großen Anzahl von RFID-Transpondern in dem jeweiligen Funkfeld ergibt sich eine hohe Wahrscheinlichkeit dafür, dass einzelne RFID-Transponder durch Interferenzen, Abschirmeffekte oder ungünstige Ausrichtung zu den Leseeinheiten der Erfassungsvorrichtung als Fehllesungen (negative false read) bezeichnet - nicht erkannt werden. Dies kann bei Stückgut zwar dadurch umgangen werden, dass dieses über ein Förderband durch oder entlang einer Erfassungseinrichtung gefahren wird, was wiederum einer Vereinzelung nahekommt. Im Fall von Palettenware oder Rollcontainern wäre dies nur mit großem Aufwand möglich.

Anspruch 1 ist gegenüber EP1914662 A1 abgegrenzt.

Vor diesem Hintergrund liegt der vorliegenden Erfindung die Aufgabe zu Grunde, eine Erfassungseinrichtung anzugeben, mit der die Erfassung von mit Transpondern versehenen Waren mit erhöhter Zuverlässigkeit, d.h. mit geringeren Fehllesungen, vorgenommen werden kann. Diese Aufgabe ist durch eine Erfassungsvorrichtung gemäß Anspruch 1 gelöst worden. Vorteilhafte Ausgestaltungen sind Gegenstand der abhängigen Ansprüche.

Eine erfindungsgemäße Erfassungsvorrichtung ist insbesondere für die Bulk-Erfassung von mit Transpondern versehenen Waren ausgebildet, besonders bevorzugt für die Erfassung von Waren auf Paletten oder in Rollcontainern. Eine derartige Erfassungsvorrichtung weist wenigstens eine Leseeinrichtung zur berührungslosen Identifikation von Transpondern, einen Lesebereich, der zumindest abschnittsweise innerhalb der Reichweite der Leseeinrichtung angeordnet ist und in dem Waren zur Bulk-Erfassung angeordnet werden können, einen Ausgang für innerhalb des Lesebereichs befindliche Waren und eine Begrenzungseinrichtung zum temporären Begrenzen des Ausgangs und/oder der Position von Waren im Lesebereich auf, wobei die Begrenzungseinrichtung dazu eingerichtet ist, den Ausgang des Lesebereichs und/oder die Entfernung von Waren aus dem Lesebereich erst nach Ablauf einer vorbestimmten Zeitdauer nach Beginn eines jeweiligen Lesevorgangs freizugeben. Die Leseeinrichtung kann mehrachsig automatisiert verfahrbar sein. Der Lesebereich ist vorzugsweise abgeschirmt.

Durch die erfindungsgemäße Ausgestaltung der Erfassungsvorrichtung kann vermieden werden, dass die jeweils zu erfassenden Waren zu früh aus dem Lesebereich entfernt werden und so eine nur unzureichende beziehungsweise unvollständige Erfassung erfolgt. Durch die Begrenzung des Ausgangs beziehungsweise durch die Begrenzung der Position der Waren im Lesebereich während der jeweils vorbestimmten Zeitdauer kann mit erhöhter Sicherheit gewährleistet werden, dass eine vollständige Erfassung sämtlicher Waren beziehungsweise der an den Waren angeordneten Transpondern vorgenommen wird und die Waren erst im Anschluss aus dem Lesebereich entfernt werden. Je nach vorbestimmter Zeitdauer lässt sich hierdurch die Fehlerquote bei der Bulk-Erfassung von Waren signifikant verringern, wodurch Zeit und Kosten eingespart werden können.

In vorteilhafter Ausgestaltung der Erfassungsvorrichtung entspricht die vorbestimmte Zeitdauer der jeweiligen Lesevorgangsdauer oder ist länger bemessen. Die Zuverlässigkeit der Warenerfassung kann so in besonders hohem Maße gewährleistet werden.

In weiter bevorzugter Ausgestaltung der Erfassungsvorrichtung ist/sind die vorbestimmte Zeitdauer und/oder die Lesevorgangsdauer und/oder -geschwindigkeit in Abhängigkeit der Warenmenge und/oder des Warenvolumens und/oder des Warentyps und/oder der Packungsdichte und/oder des Warenbehältnisses und/oder der Transpondertypen einstellbar. Auf diese Weise kann bei hoher Zuverlässigkeit im Betrieb der Erfassungsvorrichtung gleichzeitig auch ein hohes Maß an Flexibilität sichergestellt werden. Die Erfassungsvorrichtung kann insbesondere auf den jeweiligen Anwendungsfall angepasst werden, sodass die Effizienz in der Erfassung von Waren nicht durch die konkreten Gegebenheiten unterschiedlicher Erfassungsszenarios beeinträchtigt wird.

Gemäß einer weiter bevorzugten Ausgestaltung der Erfassungsvorrichtung ist/sind die vorbestimmte Zeitdauer und/oder die Lesevorgangsdauer und/oder -geschwindigkeit auf Grundlage empirischer Versuchsdaten voreingestellt. Hierbei kann es sich insbesondere um empirische Versuchsdaten unter Berücksichtigung der Warenmenge und/oder des Warenvolumens und/oder des Warentyps/Wareneigenschaften und/oder der Packungsdichte und/oder des Warenbehältnisses und/oder der Transpondertypen/Transponderperformance handeln. Durch die Nutzung empirischer Versuchsdaten, gespeichert, bewertet und verwaltet in der Auswerteeinheit als vom Anwendungsfall abhängige typische Einstellprofile, kann die Erfassungssicherheit weiter verbessert werden, bei gleichzeitiger Begrenzung der vorbestimmten Zeitdauer und/oder der Lesevorgangsdauer auf ein wirtschaftliches Maß.

In weiter bevorzugter Ausgestaltung der Erfassungsvorrichtung ist/sind die vorbestimmte Zeitdauer und/oder die Lesevorgangsdauer zur Erzielung einer Erfassungsrate von wenigstens 90%, insbesondere von mehr als 95%, weiter bevorzugt von mehr als 99%, besonders bevorzugt von mehr als 99,9% eingestellt. Die im jeweiligen Anwendungsfall noch akzeptable Fehlerquote kann so im Hinblick auf einen wirtschaftlichen Betrieb der Erfassungsvorrichtung auf das jeweils gewünschte Maß eingestellt werden.

Weiterhin kann es von Vorteil sein, wenn bei der erfindungsgemäßen Erfassungsvorrichtung der Lesebereich wenigstens abschnittsweise durch eine Tunnelstruktur begrenzt wird. Eine derartige Tunnelstruktur ist robust im Aufbau und verhältnismäßig einfach herzustellen. Gleichzeitig erlaubt eine Tunnelstruktur die einfache Unterbringung einer Leseeinrichtung. Dabei kann die Tunnelstruktur bevorzugt den Ausgang des Lesebereichs und/oder einen Eingang zum Lesebereich bilden. Die zu erfassenden Waren können so mit nur geringem Aufwand in den Lesebereich innerhalb der Tunnelstruktur befördert und auch wieder aus der Tunnelstruktur und damit aus dem Lesebereich entfernt werden. Die Tunnelstruktur kann den Lesebereich seitlich begrenzen. Die korrekte Positionierung der Waren innerhalb des Lesebereichs wird dem Bedienpersonal dadurch erleichtert.

Gemäß einer weiteren vorteilhaften Ausgestaltung der Erfassungsvorrichtung bildet der Ausgang des Lesebereichs gleichzeitig einen Eingang in den Lesebereich. Ausgang und Eingang sind in einer solchen Ausgestaltung identisch. Dies erlaubt einen besonders einfachen Aufbau. Demgegenüber können der Ausgang und der Eingang des Lesebereichs auch getrennt voneinander ausgebildet sein, insbesondere an gegenüberliegenden Seiten des Lesebereichs angeordnet sein. Auf diese Weise können Waren an einer Seite des Lesebereichs in diesen hinein befördert und an einer anderen Seite wieder aus diesem entfernt werden. Vor- und nachgelagerte Logistikprozesse können hierdurch erleichtert werden.

In weiter bevorzugter Ausgestaltung der Erfassungseinrichtung sind wenigstens zwei Begrenzungseinrichtungen vorgesehen sind, wobei bevorzugt eine der Begrenzungseinrichtungen ausgangsseitig und eine weitere Begrenzungseinrichtungen eingangsseitig vorgesehen ist. Weiter bevorzugt ist die eingangsseitige Begrenzungseinrichtung dazu eingerichtet, den Eingang des Lesebereichs und/oder die Entfernung der Waren aus dem Lesebereich erst nach Ablauf einer vorbestimmten Zeitdauer nach Beginn eines jeweiligen Lesevorgangs freizugeben. Auf diese Weise lässt sich die Erfassungseinrichtung in vorteilhafter Weise bidirektional verwenden und dadurch beispielsweise als Schleuse einsetzen.

Nach einer weiteren bevorzugten Ausführungsform ist die Begrenzungseinrichtung als Eingangs- oder Ausgangstür, Eingangs- oder Ausgangsgitter oder Eingangs- oder Ausgangsschranke ausgebildet. Bevorzugt ist die Begrenzungseinrichtung verschiebbar, schwenkbar und/oder rollbar. Weiter bevorzugt kann die Begrenzungseinrichtung zwischen einer den Eingang oder Ausgang begrenzenden Begrenzungsposition und einer den Ausgang freigebenden Freigabeposition bewegt werden. Eine solche Ausgestaltung ist kostengünstig realisierbar und einfach in der Bedienung bei gleichzeitig hoher Betriebssicherheit.

In weiter bevorzugter Ausgestaltung der Erfassungseinrichtung kann die Begrenzungseinrichtung als Stoppelement und/oder Pollerelement ausgebildet sein, insbesondere als Stoppschiene ausgebildet sein, bevorzugt im bodennahmen Bereich. Dabei kann das Stoppelement und/oder Pollerelement verschiebbar und/oder schwenkbar oder/und klappbar angeordnet sein. Besonders bevorzugt kann das Stoppelement und/oder Pollerelement zwischen einer aus dem Boden ragenden Begrenzungsposition und einer innerhalb des Bodens angeordneten Freigabeposition bewegt werden. Auf diese Weise kann die Position von Waren und/oder eines Transportbehältnisses beziehungsweise einer Palette mit geringem konstruktivem Aufwand temporär begrenzt werden.

Die Begrenzungseinrichtung kann in vorteilhafter Weise elektromechanisch angetrieben sein, was mit nur geringen Kosten bewerkstelligt werden kann.

Weiterhin kann gemäß einer Ausführungsform der Erfassungseinrichtung die Begrenzungseinrichtung während eines Lesevorgangs und/oder vor Ablauf der vorbestimmten Zeitdauer passierbar sein, insbesondere durch einen Nutzer aktiv geöffnet werden. In diesem Fall würde durch die Begrenzungseinrichtung keine Verriegelung erfolgen, wodurch der Gesamtaufbau der Erfassungseinrichtung mit nur geringem konstruktivem Aufwand umgesetzt werden kann. Weiterhin kann die Begrenzungseinrichtung so ausgestaltet sein, dass sie während eines Lesevorgangs nur erschwert passierbar ist. Dies kann beispielsweise bei der Ausbildung als Stopp- oder Pollerelement der Fall sein, die trotz der Positionierung in einer Begrenzungsposition beispielsweise aktiv durch einen Bediener überfahrbar sein können. Ebenso besteht die Möglichkeit, die Begrenzungseinrichtung als Sperreinrichtung zum temporären Verschließen des Ausgangs auszubilden. In diesem Fall erfolgt im Betrieb der Vorrichtung während der vorbestimmten Zeitdauer eine Verriegelung des Ausgangs, sodass Fehlbedienungen, insbesondere eine vorzeitige Entfernung der Waren aus dem Lesebereich, sicher vermieden werden können. Schließlich kann die Begrenzungseinrichtung auch als Stoppelement oder Pollerelement zum temporären Verhindern des Entfernens und/oder des Passierens von Waren und/oder Transportbehältern aus dem Lesebereich ausgebildet sein. Bei einer solchen Ausgestaltung soll das Entfernen von Waren aus dem Lesebereich während des Lesevorgangs vollständig verhindert werden.

Weiterhin kann es von Vorteil sein, wenn die Leseeinrichtung dazu eingerichtet ist, den Lesevorgang abzubrechen und/oder das Leseergebnis zu verwerfen, wenn die zu erfassenden Waren den Ausgang vor Ablauf der vorbestimmten Zeitdauer und/oder noch während des Lesevorgangs passieren. Eine entsprechende Ausgestaltung kann auch den Abbruch des Lesevorgangs und/oder die Verwerfung des Leseergebnisses vorsehen, wenn die zu erfassenden Waren vor Ablauf der vorbestimmten Zeitdauer durch den Eingang wieder aus dem Lesebereich entfernt werden. Im Falle einer etwaigen Fehlbedienung der Erfassungsvorrichtung wird auf diese Weise verhindert, dass weitere Logistikprozesse auf Grundlage unvollständiger Erfassungsergebnisse fortgeführt werden.

Gemäß einer weiteren Ausführungsform der Erfassungsvorrichtung weist die Leseeinrichtung wenigstens eine Leseeinheit, vorzugsweise eine Mehrzahl von Leseeinheiten auf. Mit einer Mehrzahl von derartigen Leseeinheiten kann eine weiter verbesserte Erfassungssicherheit beziehungsweise eine verbesserte Effizienz im Betrieb erreicht werden. Dabei kann die zumindest eine Leseeinheit als oder mit Antenne ausgebildet sein, insbesondere zur Erfassung von RFID-Transpondern. Solche Leseeinheiten bzw. Antennen sind kostengünstig und mit geringem Aufwand in eine voranstehend erwähnte Tunnelstruktur zu integrieren.

Weiter bevorzugt weist die Leseeinrichtung eine Steuerungseinheit und/oder eine Auswerteeinheit auf, sodass eine Reproduzierbarkeit der Lese- und Auswertevorgänge gewährleistet werden kann. Vorzugsweise können in der Steuerungseinheit und/oder eine Auswerteeinheit die Steuerprofile der Erfassungsverläufe mit einer hohen Erfassungsrate, in Abhängigkeit vom Anwendungsfall, als Referenzmodelle abgespeichert werden. Die Referenzmodelle können u.a. auf den Parametern wie inkrementeller Verfahrensweg, Verfahrensgeschwindigkeits-Profil, Antennenauswahl, Modulationsprinzip, Antennentaktung, Lesezykluszahl basieren. Es kann hierbei von Vorteil sein, wenn die Steuerungseinheit an eine übergeordnete IT-Struktur, bevorzugt umfassend zumindest eine Datenbank, eingebunden ist. Die Funktionalität der Erfassungsvorrichtung kann hierdurch in geeigneter Weise an den jeweiligen Anwendungsfall optimal angepasst werden.

Nach einer weiteren Ausgestaltung der Erfassungsvorrichtung ist wenigstens eine Leseeinheit relativ zum Lesebereich beweglich angeordnet, insbesondere automatisiert bewegbar. Dabei kann die Bewegung, d.h. das automatische Verfahren der Leseeinheit längs einer Raumachse, bevorzugt durch die Steuerungseinheit gesteuert werden. Insbesondere kann die Leseeinheit dazu eingerichtet sein, während eines Lesevorgangs relativ zum Lesebereich bewegt zu werden. Ein gleichzeitiges Verfahren der Leseeinheit hat zur Folge, dass eine optimale räumliche Abdeckung bzw. Feldabdeckung der zu erfassenden Waren vorzugsweise mit Transpondern im Lesebereich erzielt wird. Gleichzeitig bewirkt das veränderliche Antennenfeld der Leseeinheit, das sich durch die Bewegung laufend zeitlich und räumlich dynamisch ändert, beim Lesevorgang eine bessere Trennung bzw. Erkennung von eng zusammenliegenden Transpondern und die Verschiebung der durch Reflektionen entstandenen Feldauslöschungen. Die Erfassungssicherheit wird somit weiter verbessert.

In bevorzugter Weise kann die wenigstens eine Leseeinheit an einem Träger angeordnet sein, der relativ zum Lesebereich beweglich ist, insbesondere automatisiert bewegbar ist. Die Bewegung kann durch die Steuerungseinheit vorgegeben werden oder steuerbar sein. Die Anordnung der Leseeinheit an einem Träger ermöglicht eine konstruktiv einfach zu realisierende Beweglichkeit bei gleichzeitig robustem Aufbau. Ebenso können an einem Träger eine Vielzahl von Leseeinheiten angeordnet werden, wodurch ein etwaiger Steuerungsaufwand reduziert wird.

In besonders bevorzugter Weise ist eine Führungsschiene oder ein Portalschlitten zur automatisierten Bewegung der wenigstens einen Leseeinheit oder für den Träger der Leseeinheit vorgesehen. Eine solche Führungsschiene oder ein Portalschlitten lässt sich mit wenig Aufwand in eine voranstehend beschriebene Tunnelstruktur einbauen und gestattet dabei eine zuverlässige und genaue Führung der jeweiligen Leseeinheit beziehungsweise des jeweiligen Trägers.

Nach einer weiteren Ausgestaltung der Erfassungsvorrichtung erstreckt sich die Führungsschiene oder der Portalschlitten im Wesentlichen entlang der Einfahrts- und/oder Ausfahrtsrichtung des Lesebereichs. Dabei kann sich der Träger der Leseeinheit im Wesentlichen quer zur Einfahrts- und/oder Ausfahrtsrichtung des Lesebereichs erstrecken. Auf diese Weise kann die vorzugsweise mehrachsige Bewegung des Trägers beziehungsweise der darauf angeordneten Leseeinheiten vorteilhaft an die tatsächliche Position der Waren innerhalb des Lesebereichs angepasst werden.

Weiterhin kann es von Vorteil sein, wenn die wenigstens eine Leseeinheit oberhalb des Lesebereichs angeordnet ist, bevorzugt sämtliche Leseeinheiten oberhalb des Lesebereichs angeordnet sind. Ebenso kann zumindest eine Leseeinheit seitlich des Lesebereichs angeordnet sein. Die Positionierung der wenigstens einen Leseeinheit oberhalb des Lesebereichs lässt sich konstruktiv einfach bewerkstelligen. Zusätzliche Leseeinheiten seitlich des Lesebereichs können die Erfassungsgenauigkeit weiter verbessern.

In weiter bevorzugter Ausgestaltung der Erfassungsvorrichtung ist der Lesebereich zur Aufnahme und/oder Positionierung eines standardisierten Transportbehälters und/oder eines Rollcontainers und/oder einer standardisierten Palette und/oder von Stapelware, insbesondere in standardisierten Gebinden, dimensioniert. Die Aufnahmefähigkeit für einen Rollcontainer oder für eine standardisierte Palette erlaubt eine gute Einbindung der Erfassungsvorrichtung in herkömmliche Logistikprozesse, ohne dass aufwändige Handhabungsvorgänge mit den fraglichen Waren erforderlich sind.

Gemäß einer weiteren Ausführungsform der vorliegenden Erfassungsvorrichtung ist wenigstens ein Sensor zur Erfassung der Größe und/oder Position eines innerhalb des Lesebereichs befindlichen Behälters oder einer Palette vorgesehen, insbesondere eine Mehrzahl von Sensoren. Auf diese Weise kann der durch die Leseeinrichtung auszulesende Bereich genau ermittelt und auf den jeweiligen Erfassungsfall angepasst werden. Beispielsweise können hierdurch unnötig weite Verfahrwege der wenigstens einen Leseeinheit vermieden werden. Die Dauer des Lesevorgangs lässt sich somit auf ein geringes Maß reduzieren.

Weiterhin kann es von Vorteil sein, wenn vorzugsweise der gesamte Lesebereich während eines Lesevorgangs zumindest durch die Tunnelstruktur und/oder durch die Begrenzungsvorrichtung abgeschirmt ist. Eine solche Abschirmung des Lesebereichs hat eine weitere Verkürzung des Lesevorgangs zur Folge, da nur die Transponder erfasst werden müssen oder sollen, die für den jeweiligen Prozess relevant sind.

Schließlich kann auch eine Schließeinheit für den Eingang vorgesehen sein, die zur wenigstens abschnittsweisen Abschirmung des Lesebereichs ausgebildet ist, wobei die Schließeinheit vorzugsweise als Vorhang ausgebildet ist, der weiter bevorzugt aus mit Silber beschichtetem Gewebe besteht und der noch weiter bevorzugt über Leichtlaufrollen zwischen einer geöffneten und geschlossenen Stellung verschiebbar ist. Durch eine derartige Schließeinheit für den Eingang kann eine weiter verbesserte Abschirmung sichergestellt werden. Lesevorgänge lassen sich auf diese Weise weiter verkürzen.

Ein weiterer Aspekt der vorliegenden Erfindung betrifft ein Verfahren zur Bulk-Erfassung von Waren, bei dem eine Vielzahl von mit Transpondern versehenen Waren in einem Lesebereich einer Erfassungsvorrichtung positioniert wird, bei dem wenigstens eine Leseeinrichtung die Transponder der Waren berührungslos identifiziert, bei dem ein Ausgang für innerhalb des Lesebereichs befindliche Waren zumindest während des Lesevorgangs durch eine Begrenzungseinrichtung begrenzt wird und bei dem die Begrenzungseinrichtung den Ausgang des Lesebereichs erst nach Ablauf einer vorbestimmten Zeitdauer nach Beginn eines jeweiligen Lesevorgangs der Leseeinrichtung freigibt.

Durch ein erfindungsgemäßes Verfahren kann, wie auch in Bezug auf die voranstehend beschrieben Erfassungsvorrichtung beschrieben worden ist, vermieden werden, dass die jeweils zu erfassenden Waren zu früh aus dem Lesebereich entfernt werden und so eine nur unzureichende beziehungsweise unvollständige Erfassung erfolgt. Die Begrenzung des Ausgangs während der jeweils vorbestimmten Zeitdauer kann eine vollständige Erfassung sämtlicher Waren beziehungsweise der an den Waren angeordneten Transpondern mit erhöhter Sicherheit gewährleisten. die Fehlerquote bei der Bulk-Erfassung von Waren lässt sich durch ein solches Verfahren signifikant verringern, sodass Zeit und Kosten eingespart werden können. Ein erfindungsgemäßes Verfahren zur Bulk-Erfassung von Waren kann in besonders vorteilhafter Weise mit einer voranstehend beschriebenen Erfassungsvorrichtung durchgeführt werden.

Weitere Ausgestaltungen der vorliegenden Erfindung ergeben sich aus Kombinationen der in den Ansprüchen, der Beschreibung sowie den Figuren offenbarten Merkmale. Die vorliegende Erfindung wird nachfolgend anhand von Ausführungsbeispielen und zugehörigen Zeichnungen erläutert.

### Kurze Beschreibung der Figuren

Es zeigen:
- Figur 1: eine Erfassungsvorrichtung gemäß einem Ausführungsbeispiel der vorliegenden Erfindung in schematischer Perspektivansicht.
- Figur 2: eine Anordnung von Leseeinheiten einer Erfassungsvorrichtung gemäß einem Ausführungsbeispiel der vorliegenden Erfindung in schematischer Perspektivansicht.

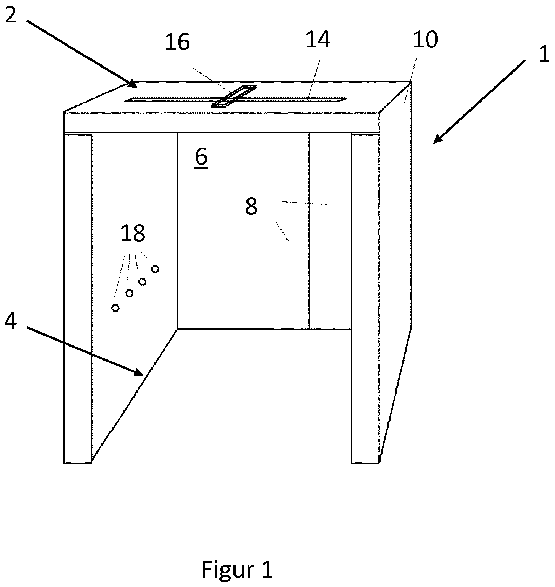

Die Figur 1 zeigt eine Erfassungsvorrichtung 1 gemäß einem Ausführungsbeispiel der vorliegenden Erfindung in schematischer Perspektivansicht. Die Erfassungsvorrichtung 1 ist vorzugsweise für die Bulk-Erfassung von mit Transpondern versehenen Waren ausgebildet. Die Erfassungsvorrichtung 1 weist wenigstens eine Leseeinrichtung 2 zur berührungslosen Identifikation von Transpondern auf. Ferner ist die Erfassungsvorrichtung 1 mit einem Lesebereich 4 ausgestattet, der zumindest abschnittsweise innerhalb der Reichweite der Leseeinrichtung 2 angeordnet ist und in dem Waren zur Bulk-Erfassung angeordnet werden können. Weiterhin ist ein Ausgang 6 für innerhalb des Lesebereichs 4 befindliche Waren vorgesehen. Schließlich weist die Erfassungseinrichtung eine Begrenzungseinrichtung 8 zum temporären Begrenzen des Ausgangs 6 auf. Die Begrenzungseinrichtung 8 ist dazu eingerichtet, den Ausgang 6 des Lesebereichs 4 erst nach Ablauf einer vorbestimmten Zeitdauer nach Beginn eines jeweiligen Lesevorgangs freizugeben.

Der Lesebereich 4 wird, wie in der Figur 1 gezeigt, wenigstens abschnittsweise durch eine Tunnelstruktur 10 begrenzt. Rein beispielhaft sind gemäß der Darstellung in der Figur 1 Ausgang und Eingang des Lesebereichs 4 getrennt voneinander ausgebildet, insbesondere an gegenüberliegenden Seiten des Lesebereichs 4 angeordnet. Die Begrenzungseinrichtung 8 kann als Ausgangstür, -gitter oder -schranke ausgebildet sein, die bevorzugt verschiebbar, schwenkbar und/oder rollbar ist. Die Begrenzungseinrichtung 8 kann auch mehrteilig ausgeführt sein, insbesondere durch Anordnung einer Mehrzahl von Türen oder dergleichen.

Weiterhin kann die Begrenzungseinrichtung 8 während eines Lesevorgangs und/oder vor Ablauf der vorbestimmten Zeitdauer passierbar sein, insbesondere durch einen Nutzer aktiv geöffnet werden. Ebenso kann die Begrenzungseinrichtung 8 als Sperreinrichtung zum temporären Verschließen des Ausgangs ausgebildet sein.

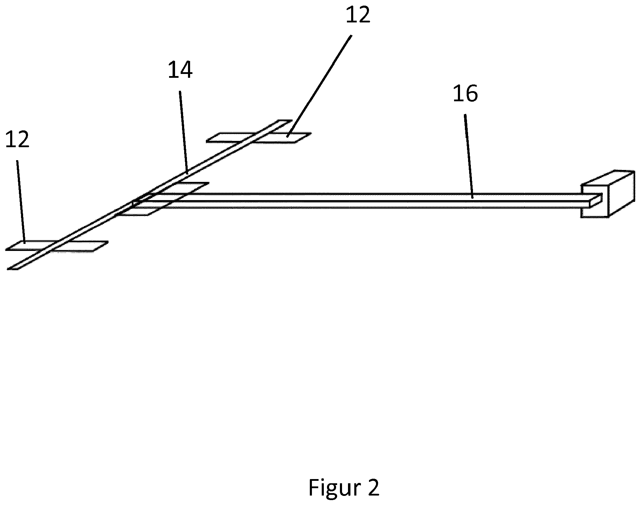

Wie der Figur 2 entnommen werden kann, weist die Leseeinrichtung 2 wenigstens eine Leseeinheit 12, vorzugsweise eine Mehrzahl von Leseeinheiten 12 auf. Die Leseeinheiten 12 können als Antenne ausgebildet sein, insbesondere zur Erfassung von RFID-Transpondern. Die Leseeinheiten 12 können ferner an einem Träger 14 angeordnet sein, der relativ zum Lesebereich 4 beweglich, insbesondere automatisiert bewegbar angeordnet ist. Der Träger 14 kann vorteilhaft an einer Führungsschiene oder einem Portalschlitten 16 zur automatisierten Bewegung angeordnet sein. Die Führungsschiene oder der Portalschlitten 16 erstreckt sich im Wesentlichen entlang der Einfahrts- und/oder Ausfahrtsrichtung des Lesebereichs 4 und der Träger 14 der Leseeinheit 12 erstreckt sich im Wesentlichen quer zur Einfahrts- und/oder Ausfahrtsrichtung des Lesebereichs 4. Ebenso kann sich die Führungsschiene oder der Portalschlitten 16 im Wesentlichen quer zur Einfahrts- und/oder Ausfahrtsrichtung des Lesebereichs 4 erstrecken und der Träger 14 der Leseeinheit 12 kann sich im Wesentlichen entlang der Einfahrts- und/oder Ausfahrtsrichtung des Lesebereichs 4 erstrecken.

An der Tunnelstruktur 10 kann ferner wenigstens ein Sensor 18 zur Erfassung der Größe und/oder Position eines innerhalb des Lesebereichs 4 befindlichen Behälters oder einer Palette vorgesehen sein, insbesondere eine Mehrzahl von Sensoren 18. Der Verfahrweg der Leseeinheiten 12 kann in Abhängigkeit von Sensordaten begrenzt werden.

Im Betrieb der Erfassungsvorrichtung 1 wird beispielsweise ein Container oder eine Palette mit Waren in den Lesebereich der Erfassungseinrichtung gefahren. Anschließend wird ein Lesevorgang der Leseeinrichtung 2 initiiert, wobei gleichzeitig eine Bewegung der Leseeinheiten 12 über die Portalbahn 16 erfolgt. Um die Lesevorgangsdauer zu verbessern, kann weiterhin die Geschwindigkeit und/oder der Geschwindigkeitsverlauf der Antennenbewegung bzw. der Bewegung der Leseeinheiten in beiden Achsen, und dies unabhängig voneinander, nach Auswertung eines ersten Leseergebnisses durch die Steuerungseinheit an die Anzahl der zu scannenden Artikel angepasst werden. Nach der vorbestimmten Zeitdauer wird die Begrenzungseinrichtung 8 von der Steuerungseinheit geöffnet und die Palette oder der Container kann den Lesebereich 4 verlassen.

### Bezugszeichenliste

- 1: Erfassungsvorrichtung
- 2: Leseeinrichtung
- 4: Lesebereich
- 6: Ausgang
- 8: Begrenzungseinrichtung
- 10: Tunnelstruktur
- 12: Leseeinheit(en)
- 14: Träger
- 16: Portalbahn

## Patentansprüche

1. Erfassungsvorrichtung (1), insbesondere für die Bulk-Erfassung von mit Transpondern versehenen Waren,
- mit wenigstens einer Leseeinrichtung (2) zur berührungslosen Identifikation von Transpondern,
- mit einem Lesebereich (4), der zumindest abschnittsweise innerhalb der Reichweite der Leseeinrichtung angeordnet ist und in dem Waren zur Bulk-Erfassung angeordnet werden können,
- mit einem Ausgang (6) für innerhalb des Lesebereichs (4) befindliche Waren und
- mit einer Begrenzungseinrichtung (8) zum temporären Begrenzen des Ausgangs (6) und/oder der Position von Waren im Lesebereich (4),
- wobei die Leseeinrichtung (2) wenigstens eine Leseeinheit (12) aufweist, die relativ zum Lesebereich (4) automatisiert bewegbar ist,
- wobei die Begrenzungseinrichtung als Sperreinrichtung zum temporären Verschließen des Ausgangs ausgebildet ist,
- wobei die Begrenzungseinrichtung (8) dazu eingerichtet ist, den Ausgang (6) des Lesebereichs (4) und/oder die Entfernung der Waren aus dem Lesebereich (4) erst nach Ablauf einer vorbestimmten Zeitdauer nach Beginn eines jeweiligen Lesevorgangs freizugeben, **dadurch gekennzeichnet, dass** die Begrenzungseinrichtung (8) dazu eingerichtet ist, den Ausgang während der vorbestimmten Zeitdauer zu verriegeln.

2. Erfassungsvorrichtung (1) nach Anspruch 1, **dadurch gekennzeichnet, dass** die vorbestimmte Zeitdauer der jeweiligen Lesevorgangsdauer entspricht oder länger bemessen ist.

3. Erfassungsvorrichtung (1) nach Anspruch 1 oder 2, **dadurch gekennzeichnet, dass** die vorbestimmte Zeitdauer und/oder die Lesevorgangsdauer und/oder -geschwindigkeit in Abhängigkeit der Warenmenge und/oder des Warenvolumens und/oder des Warentyps und/oder der Packungsdichte und/oder des Warenbehältnisses und/oder der Transpondertypen einstellbar ist/sind.

4. Erfassungsvorrichtung (1) nach einem der vorangehenden Ansprüche, **dadurch gekennzeichnet, dass** die vorbestimmte Zeitdauer und/oder die Lesevorgangsdauer auf Grundlage empirischer Versuchsdaten voreingestellt ist/sind, insbesondere empirischer Versuchsdaten unter Berücksichtigung der Warenmenge und/oder des Warenvolumens und/oder des Warentyps und/oder der Packungsdichte und/oder des Warenbehältnisses und/oder der Transpondertypen.

5. Erfassungsvorrichtung (1) nach einem der vorangehenden Ansprüche, **dadurch gekennzeichnet, dass** die vorbestimmte Zeitdauer und/oder die Lesevorgangsdauer zur Erzielung einer Erfassungsrate von wenigstens 90%, insbesondere von mehr als 95%, weiter bevorzugt von mehr als 99%, besonders bevorzugt von mehr als 99,9% eingestellt ist/sind.

6. Erfassungsvorrichtung (1) nach einem der vorangehenden Ansprüche, **dadurch gekennzeichnet, dass** der Lesebereich (4) wenigstens abschnittsweise durch eine Tunnelstruktur (10) begrenzt wird, wobei die Tunnelstruktur (10) bevorzugt den Ausgang des Lesebereichs (4) und/oder einen Eingang zum Lesebereich (4) bildet und/oder wobei die Tunnelstruktur (10) den Lesebereich (4) seitlich begrenzt.

7. Erfassungseinrichtung (1) nach einem der vorangehenden Ansprüche, **dadurch gekennzeichnet, dass** wenigstens eine Begrenzungseinrichtung (8) ausgangsseitig und/oder wenigstens eine Begrenzungseinrichtung (8) eingangsseitig vorgesehen ist/sind, wobei vorzugsweise die eingangsseitige Begrenzungseinrichtung (8) dazu eingerichtet ist, den Eingang des Lesebereichs (4) und/oder die Entfernung der Waren aus dem Lesebereich (4) erst nach Ablauf einer vorbestimmten Zeitdauer nach Beginn eines jeweiligen Lesevorgangs freizugeben.

8. Erfassungseinrichtung (1) nach einem der vorangehenden Ansprüche, **dadurch gekennzeichnet, dass** die Begrenzungseinrichtung (8) als Eingangs- oder Ausgangstür, Eingangs- oder Ausgangsgitter oder Eingangs- oder Ausgangsschranke ausgebildet ist, die bevorzugt verschiebbar, schwenkbar und/oder rollbar ist und/oder wobei die Begrenzungseinrichtung (8) zwischen einer den Ausgang (6) begrenzenden Begrenzungsposition und einer den Eingang oder Ausgang (6) freigebenden Freigabeposition bewegt werden kann.

9. Erfassungsvorrichtung (1) nach einem der vorangehenden Ansprüche, **dadurch gekennzeichnet, dass** die Leseeinrichtung (2) eine Steuerungseinheit und/oder eine Auswerteeinheit aufweist, wobei die Steuerungseinheit vorzugsweise an eine übergeordnete IT-Struktur angebunden ist, wobei die IT-Struktur bevorzugt zumindest eine Datenbank umfasst.

10. Erfassungsvorrichtung nach einem der vorangehenden Ansprüche, **dadurch gekennzeichnet, dass** die Bewegung der Leseeinheit (12) durch die Steuerungseinheit gesteuert wird.

11. Erfassungsvorrichtung nach einem der vorangehenden Ansprüche, **dadurch gekennzeichnet, dass** eine Führungsschiene oder ein Portalschlitten zur automatisierten Bewegung der wenigstens einen Leseeinheit (12) oder für einen Träger (14) der Leseeinheit (12) vorgesehen ist.

12. Erfassungsvorrichtung nach Anspruch 11, **dadurch gekennzeichnet, dass** sich die Führungsschiene oder der Portalschlitten im Wesentlichen entlang der Einfahrts- und/oder Ausfahrtsrichtung des Lesebereichs (4) erstreckt und/oder wobei sich der Träger (14) der Leseeinheit (12) im Wesentlichen quer zur Einfahrts- und/oder Ausfahrtsrichtung des Lesebereichs (4) erstreckt.

13. Erfassungsvorrichtung (1) nach einem der vorangehenden Ansprüche, **dadurch gekennzeichnet, dass** der Lesebereich (4) während eines Lesevorgangs zumindest durch die Tunnelstruktur (10) und/oder durch die Begrenzungseinrichtung (8) abgeschirmt ist.

14. Erfassungsvorrichtung (1) nach einem der vorangehenden Ansprüche, **dadurch gekennzeichnet, dass** eine Schließeinheit für den Eingang vorgesehen ist, die zur wenigstens abschnittsweisen Abschirmung des Lesebereichs (4) ausgebildet ist, wobei die Schließeinheit vorzugsweise als Vorhang ausgebildet ist, der weiter bevorzugt aus mit Silber beschichtetem Gewebe besteht und der noch weiter bevorzugt über Leichtlaufrollen zwischen einer geöffneten und geschlossenen Stellung verschiebbar ist.

15. Verfahren zur Bulk-Erfassung von Waren unter Verwendung der Erfassungsvorrichtung (1) nach einem der vorangehenden Ansprüche, wobei eine Vielzahl von mit Transpondern versehenen Waren in einem Lesebereich (4) einer Erfassungsvorrichtung (1) positioniert wird, wobei wenigstens eine Leseeinrichtung (2), die wenigstens eine relativ zum Lesebereich (4) automatisiert bewegbare Leseeinheit (12) aufweist, die Transponder der Waren berührungslos identifiziert, wobei ein Ausgang (6) für innerhalb des Lesebereichs (4) befindliche Waren zumindest während des Lesevorgangs durch eine Begrenzungseinrichtung (8), die als Sperreinrichtung zum temporären Verschließen des Ausgangs ausgebildet ist, begrenzt wird, wobei die Begrenzungseinrichtung (8) den Ausgang (6) des Lesebereichs (4) erst nach Ablauf einer vorbestimmten Zeitdauer nach Beginn eines jeweiligen Lesevorgangs der Leseeinrichtung freigibt und wobei die Begrenzungseinrichtung (8) den Ausgang während der vorbestimmten Zeitdauer verriegelt.

16. Verfahren nach Anspruch 15, **dadurch gekennzeichnet, dass** das Erfassungsergebnis durch mehrere Verfahrensabschnitte ermittelt wird, wobei im ersten Verfahrensabschnitt die Parameter zur Einstellung der Leseeinheit für die folgenden Verfahrensabschnitte ermittelt werden.

## Claims

1. Detection device (1), in particular for the bulk detection of goods provided with transponders,
- with at least one reading device (2) for contactless identification of transponders,
- with a reading area (4) which is at least section wise arranged within the range of the reading device and in which goods for bulk detection can be arranged,
- with an exit (6) for goods located within the reading area (4) and
- with a limiting device (8) for temporarily limiting the exit (6) and/or the position of goods in the reading area (4),
- wherein the reading device (2) comprises at least one reading unit (12) which can be moved automatically in relation to the reading area (4),
- wherein the limiting device is designed as a blocking device for temporarily closing the exit,
- wherein the limiting device (8) is configured to release the exit (6) of the reading area (4) and/or the removal of the goods from the reading area (4) only after a predetermined period of time has elapsed after the start of a respective reading process, **characterized in that** that the limiting device (8) is configured to lock the exit during the predetermined period of time.

2. Detection device (1) according to claim 1, **characterized in that** the predetermined time period corresponds to the respective reading process duration or is set longer.

3. Detection device (1) according to claim 1 or 2, **characterized in that** the predetermined time period and/or the reading process duration and/or speed is/are adjustable depending on the quantity of goods and/or the volume of goods and/or the type of goods and/or the packing density and/or the goods container and/or the transponder types.

4. Detection device (1) according to one of the preceding claims, **characterized in that** the predetermined time period and/or the reading process duration is/are preset on the basis of empirical test data, in particular empirical test data taking into account the quantity of goods and/or the volume of goods and/or the type of goods and/or the packing density and/or the goods container and/or the transponder types.

5. Detection device (1) according to one of the preceding claims, **characterized in that** the predetermined period and/or the reading process duration is/are set to achieve a detection rate of at least 90%, in particular more than 95%, more preferably more than 99%, particularly preferred of more than 99.9%.

6. Detection device (1) according to one of the preceding claims, **characterized in that** the reading area (4) is at least partially delimited by a tunnel structure (10), wherein the tunnel structure (10) preferably forms the exit of the reading area (4) and/or an entrance to the reading area (4) and/or wherein the tunnel structure (10) laterally delimits the reading area (4).

7. Detection device (1) according to one of the preceding claims, **characterized in that** at least one limiting device (8) is/are provided on the exit side and/or at least one limiting device (8) on the entry side, wherein the entry-side limiting device (8) is preferably configured to release the entrance of the reading area (4) and/or the removal of the goods from the reading area (4) only after a predetermined period of time has elapsed after the start of a respective reading process.

8. Detection device (1) according to one of the preceding claims, **characterized in that** the limiting device (8) is designed as an entrance or exit door, entrance or exit grille or entrance or exit barrier, which is preferably slidable, pivotable and/or rollable and/or wherein the limiting device (8) can be moved between a delimitation position delimiting the exit (6) and a release position releasing the entry or exit (6).

9. Detection device (1) according to one of the preceding claims, **characterized in that** the reading device (2) comprises a control unit and/or an evaluation unit, wherein the control unit is preferably connected to a superordinate IT structure, wherein the IT structure preferably comprises at least a database.

10. Detection device according to one of the preceding claims, **characterized in that** the movement of the reading unit (12) is controlled by the control unit.

11. Detection device according to one of the preceding claims, **characterized in that** a guide rail or a portal slide for the automated movement of the at least one reading unit (12) or for a carrier (14) of the reading unit (12) is provided.

12. Detection device according to claim 11, **characterized in that** the guide rail or the portal slide extends essentially along the entry and/or exit direction of the reading area (4) and/or wherein the carrier (14) of the reading unit (12) essentially extends transversely to the entry and/or exit direction of the reading area (4).

13. Detection device (1) according to one of the preceding claims, **characterized in that** the reading area (4) is shielded during a reading process at least by the tunnel structure (10) and/or by the limiting device (8).

14. Detection device (1) according to one of the preceding claims, **characterized in that** a closing unit is provided for the entrance, which is designed to shield the reading area (4) at least in sections, the closing unit preferably being designed as a curtain, which is more preferably made of silver-coated fabric and which is even more preferably displaceable between open and closed positions via smooth-running rollers.

15. A method for bulk detection of goods using the detection device (1) according to one of the preceding claims, wherein a plurality of goods provided with transponders is positioned in a reading area (4) of a detection device (1), wherein at least a reading device (2), which comprises at least one reading unit (12) being automatically movable relative to the reading area (4), identifies the transponders of the goods without contact, at least one exit (6) for goods located within the reading area (4) is limited during the reading process by a limiting device (8), which is designed as a blocking device for temporarily closing the output, wherein the limiting device (8) releases the exit (6) of the reading area (4) only after a predetermined period of time after the start of a respective reading process of the reading device and wherein the limiting device (8) locks the exit during the predetermined period.

16. The method according to claim 15, **characterized in that** the detection result is determined by a plurality of process sections, wherein the parameters for setting the reading unit for the following process sections are determined in the first process section.

## Revendications

1. Dispositif de détection (1), en particulier pour la détection en vrac de marchandises dotées de transpondeurs,
- avec au moins un équipement de lecture (2) pour l'identification sans contact de transpondeurs,
- avec une zone de lecture (4) qui est agencée au moins par endroits à l'intérieur de la portée de l'équipement de lecture (2) et dans laquelle des marchandises peuvent être agencées pour une détection en vrac,
- avec une sortie (6) pour des marchandises qui se trouvent à l'intérieur de la zone de lecture (4) et
- avec un équipement de délimitation (8) pour une délimitation temporaire de la sortie (6) et/ou de la position de marchandises dans la zone de lecture (4),
- dans lequel l'équipement de lecture (2) présente au moins une unité de lecture (12) qui peut être déplacée de façon automatisée par rapport à la zone de lecture (4),
- dans lequel l'équipement de délimitation est conçu en tant qu'équipement d'arrêt pour une fermeture temporaire de la sortie,
- dans lequel l'équipement de délimitation (8) est adapté pour autoriser la sortie (6) de la zone de lecture (4) et/ou l'enlèvement des marchandises hors de la zone de lecture (4) uniquement après expiration d'une durée prédéterminée après le début d'un processus de lecture respectif, **caractérisé en ce que** l'équipement de délimitation (8) est adapté pour verrouiller la sortie pendant la durée prédéterminée.

2. Dispositif de détection (1) selon la revendication 1, **caractérisé en ce que** la durée prédéterminée correspond à la durée de processus de lecture respective ou est évaluée plus longue.

3. Dispositif de détection (1) selon la revendication 1 ou 2, **caractérisé en ce que** la durée prédéterminée et/ou la durée et/ou vitesse de processus de lecture est/sont réglable(s) en fonction de la quantité de marchandises et/ou du volume de marchandises et/ou du type de marchandises et/ou de la densité de compactage et/ou du contenant des marchandises et/ou des types de transpondeurs.

4. Dispositif de détection (1) selon l'une des revendications précédentes, **caractérisé en ce que** la durée prédéterminée et/ou la durée de processus de lecture est/sont réglées(s) au préalable sur la base de données expérimentales empiriques, en particulier de données expérimentales empiriques qui tiennent compte de la quantité de marchandises et/ou du volume de marchandises et/ou du type de marchandises et/ou de la densité de compactage et/ou du contenant des marchandises et/ou des types de transpondeurs.

5. Dispositif de détection (1) selon l'une des revendications précédentes, **caractérisé en ce que** la durée prédéterminée et/ou la durée de processus de lecture est/sont réglées(s) pour atteindre une vitesse de détection d'au moins 90 %, en particulier de plus de 95 %, davantage de préférence de plus de 99 %, en particulier de préférence de plus de 99,9 %.

6. Dispositif de détection (1) selon l'une des revendications précédentes, **caractérisé en ce que** la zone de lecture (4) est délimitée au moins par endroits par une structure de tunnel (10), dans lequel la structure de tunnel (10) forme de préférence la sortie de la zone de lecture (4) et/ou une entrée de la zone de lecture (4) et/ou dans lequel la structure de tunnel (10) délimite latéralement la zone de lecture (4).

7. Dispositif de détection (1) selon l'une des revendications précédentes, **caractérisé en ce qu'**au moins un équipement de délimitation (8) est/sont prévu(s) du côté sortie et/ou au moins un équipement de délimitation (8) est/sont prévu(s) du côté entrée, dans lequel de préférence l'équipement de délimitation (8) du côté entrée est adapté pour autoriser l'entrée de la zone de lecture (4) et/ou l'enlèvement des marchandises hors de la zone de lecture (4) uniquement après expiration d'une durée prédéterminée après le début d'un processus de lecture respectif.

8. Dispositif de détection (1) selon l'une des revendications précédentes, **caractérisé en ce que** l'équipement de délimitation (8) est conçu en tant que porte d'entrée ou de sortie, grille d'entrée ou de sortie, ou barrière d'entrée ou de sortie, qui de préférence peut être coulissée, pivotée et/ou roulée, et/ou dans lequel l'équipement de délimitation (8) peut être déplacé entre une position de délimitation qui délimite la sortie (6) et une position d'autorisation qui autorise l'entrée ou la sortie (6).

9. Dispositif de détection (1) selon l'une des revendications précédentes, **caractérisé en ce que** l'équipement de lecture (2) présente une unité de commande et/ou une unité d'exploitation, dans lequel l'unité de commande est de préférence reliée à une structure informatique de niveau supérieur, dans lequel la structure informatique comprend de préférence au moins une banque de données.

10. Dispositif de détection selon l'une des revendications précédentes, **caractérisé en ce que** le déplacement de l'unité de lecture (12) est commandé par l'unité de commande.

11. Dispositif de détection selon l'une des revendications précédentes, **caractérisé en ce qu'**un rail de guidage ou une glissière de portail est prévu(e) pour le déplacement automatisé de la au moins une unité de lecture (12) ou pour un support (14) de l'unité de lecture (12).

12. Dispositif de détection selon la revendication 11, **caractérisé en ce que** le rail de guidage ou la glissière de portail s'étend essentiellement dans la direction vers l'entrée et/ou la direction vers la sortie de la zone de lecture (4), et/ou dans lequel le support (14) de l'unité de lecture (12) s'étend essentiellement transversalement à la direction vers l'entrée et/ou la sortie de la zone de lecture (4).

13. Dispositif de détection (1) selon l'une des revendications précédentes, **caractérisé en ce que** pendant un processus de lecture la zone de lecture (4) est protégée au moins par la structure de tunnel (10) et/ou par l'équipement de délimitation (8).

14. Dispositif de détection (1) selon l'une des revendications précédentes, **caractérisé en ce qu'**une unité de fermeture est prévue pour l'entrée, laquelle unité de fermeture est conçue pour protéger au moins par endroits la zone de lecture (4), dans lequel l'unité de fermeture est de préférence conçue en tant que rideau qui davantage de préférence consiste en une toile recouverte d'argent et qui davantage encore de préférence peut être coulissé entre une position ouverte et fermée par des galets de roulement légers.

15. Procédé pour la détection en vrac de marchandises, utilisant le dispositif de détection (1) selon l'une des revendications précédentes, dans lequel une pluralité de marchandises dotées de transpondeurs se voit positionnée dans une zone de lecture (4) d'un dispositif de détection (1), dans lequel au moins un équipement de lecture (2) présente la au moins une unité de lecture (12) qui peut être déplacée de façon automatisée par rapport à la zone de lecture (4), identifie sans contact les transpondeurs des marchandises, dans lequel une sortie (6) pour des marchandises qui se trouvent à l'intérieur de la zone de lecture (4) est délimitée par un équipement de délimitation (8) qui est conçu en tant qu'équipement d'arrêt pour une fermeture temporaire de la sortie, dans lequel l'équipement de délimitation (8) autorise la sortie (6) de la zone de lecture (4) uniquement après expiration d'une durée prédéterminée après le début d'un processus de lecture respectif et dans lequel l'équipement de délimitation (8) verrouille la sortie pendant la durée prédéterminée.

16. Procédé selon la revendication 15, **caractérisé en ce que** le résultat de détection est établi par plusieurs phases de procédé, dans lequel dans la première phase de procédé les paramètres sont établis pour le réglage de l'unité de lecture pour les phases de procédé suivantes.
